Europäisches Patentamt

European Patent Office

Office européen des brevets

(11) Publication number: **0 146 403**
A2

# EUROPEAN PATENT APPLICATION

(21) Application number: 84308870.9

(22) Date of filing: 18.12.84

(51) Int. Cl.⁴: **G 07 D 7/00**, G 07 F 7/08

(30) Priority: 19.12.83 GB 8333743

(43) Date of publication of application: 26.06.85
Bulletin 85/26

(84) Designated Contracting States: **CH DE FR IT LI NL SE**

(71) Applicant: THOMAS FORMAN & SONS LIMITED,
Hucknall Road, Nottingham, NG5 1FE (GB)

(72) Inventor: Helyer, Richard Martin, 92 Castellain Mansions
Castellain Road, London W9 1HB (GB)
Inventor: Hurst, Edward William, 33 Lodge Close,
Bengeo, Hertford Hertfordshire. SG14 3DH (GB)

(74) Representative: JENSEN & SON, 8 Fulwood Place High
Holborn, London WC1V 6HG (GB)

(54) **Data Integrity verification.**

(57) A method and apparatus for verifying the integrity of data applied to a body from two sources has a strobe head 14a adapted to give an output signal when the presence of a strobe marker 12 is detected to initiate a reading of further data by read heads 14b to 14d. Part of the further data comprises a binary code sub-set 13 printed with the strobe mark 12, and a second set of data, indicative of a code line printed in a second separate printing stage. A comparator compared the reading of the binary code with the reading of the second set of data. If a predetermined relationship between the two readings is not established, an output signal indicative of a mis-match is generated.

ACTORUM AG

Data Integrity Verification

This invention relates to an apparatus and a method for checking the integrity of data applied to a body to ensure that this data is consistent with other criteria of or on the body.

One particular application of the invention resides in the verification of business forms such as cheques.

When business forms such as cheques are personalised it is usual for practical reasons for the personalisation detail to be applied at different production stations. This is usually because the personalisation detail is of two distinct types for which different production processes are required. Using cheques as an example, one production station will apply to each cheque magnetic ink characters to form a data code line used in subsequent automatic sorting operations, which indicates the account holder, bank branch and other information unique to the cheque. The other production station will apply conventional print to supply personal details, usually of name and perhaps address. Another example would be where the code line for sorting is required in optically read (OCR) characters whilst the rest of the form demands a different type face.

During production processes involving more than one origination process for personalisation there is an inevitable risk that the two processes could go "out of phase". In that event, when the form is automatically sorted there would be a mis-match within the system. For example, a book may be issued to the correct account holder by name but the code line relates to another account. In consequence, amounts would be debited or credited to the wrong account when sorted.

The above description relates to simple cases where all components of a book (e.g., cheque book or credit) are produced on one web of paper. Complications are multiplied if there is a demand to produce part of the book in one web of paper, and the balance on another with a subsequent collation demand. This extra operation increases the risk of error through mis-collation as well as the mis-match possibilites.

In recent times, there has been an increase in production methods involving computer control printers using continuous stationery in one or two webs. All printers have potential mis-match problems when cheques produced on such continuous stationery incorporate data produced by two separate processes. It is therefore extremely important that mis-match errors should not occur because to correct such errors once the cheque books have been issued to account holders is extremely expensive. At the moment, the normal practice is that all cheque books are checked manually for mis-match and this is, again, an extremely expensive process.

It has been proposed to have a form of checking device comprising a bar code created by one printer and use the results of this to instruct a second printer to follow a specific print pattern. This arrangement has the disadvantage that it is not readily applicable to existing installations and the apparatus used for automatically sorting cheques. The present invention seeks to provide a system which overcomes these disadvantages.

According to the present invention there is provided apparatus for checking the integrity between two sets of data, the sets being applied to a body in two or more separate processes, or being separately applied to individual elements which are combined to form said body, the apparatus including:-

detecting means responsive to an indicator forming at least part of said first set of data on the body or an element to initiate a reading by sensor means of data positioned on said body or element at a predetermined positional relationship to said indicator, means to generate a first code representative of said data read by the sensor means,

comparator means to compare said first code with a code representative of at least a part of said second set of data,

and means to provide a signal indicative of a mis-match between said two sets of data if a predetermined
relationship between the codes is not established
by said comparator means.

Preferably, the detecting means comprises
means for generating a radiated signal, and means
to receive the radiated signal, when said indicator
is in a predetermined position relative to the detecting
means.

Preferably, at least one of said sets of data
comprises a binary code representative of at least
part of the second set of data, in which case, the
sensor means may comprise a sensor having means
for generating a radiated signal and means to receive
the radiated signal when said detecting means initiates
said reading and when a marker is aligned with said
sensor means, the presence or absence of a marker
generating an appropriate binary code digit.

In a preferred form, the apparatus comprises a frame,
detector means comprising an optical sensor switch adjustably mounted on said frame, a plurality of sensor
means comprising a plurality of optical sensor switches
adjustably mounted on said frame, means to feed a
sheet material relative to said frame, the positions
of the sensor means being adjustable to be aligned with
indicators and markers on said sheet material, means
to receive signals from the detector means and sensor
means, and comparator means to compare the received
signals and to provide an output signal if a predetermined relationship between said received signals is not indicated.

The invention also provides a method of checking the integrity between two sets of data applied to a body in two separate processes, comprising, the steps of providing as part of the first set of data, an indicator, detecting the presence of the indicator, and when an indicator is present initiating readings of further data comprising a first code representative of at least part of said first set of data and a second code representative of the second set of data, comparing the two codes and generating an output signal if a predetermined relationship between the two codes is not established.

A preferred embodiment of the invention will now be described by way of example only with reference to the accompanying drawings in which:-

Figure 1 shows a plan view of a frame carrying data read heads, and a web of paper carrying data movable past the view frame to be detected by said read head,

Figure 2 shows an end view of the apparatus of Figure 1, and,

Figure 3 shows a schematic view of an alternative form of apparatus,

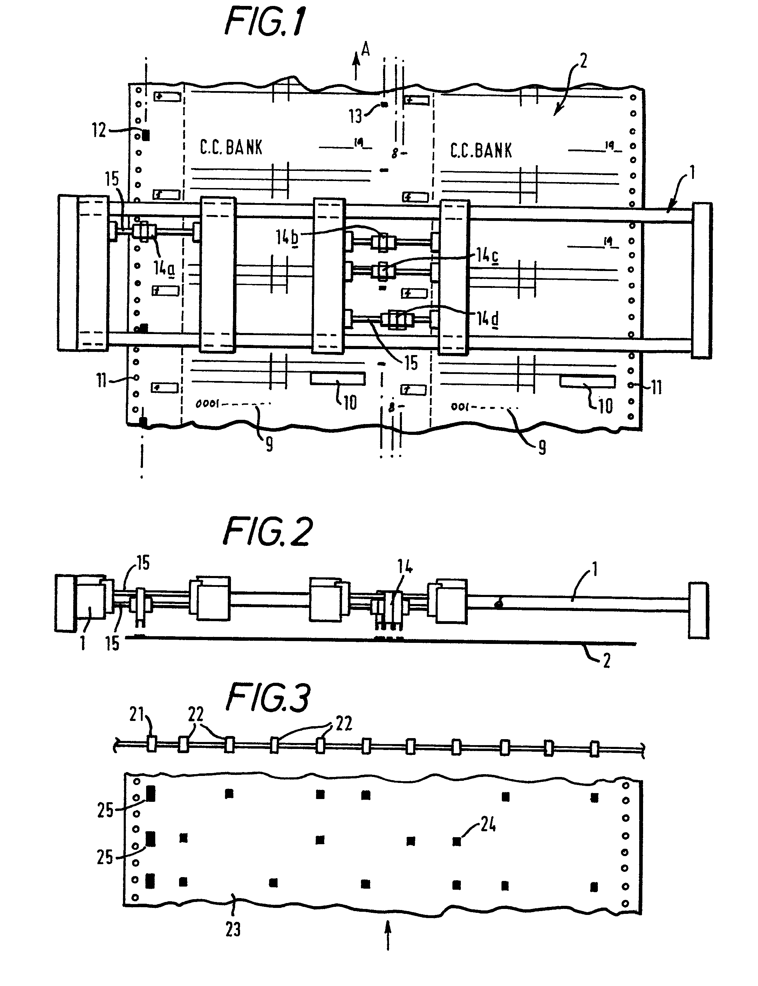

Referring now to Figure 1, there is shown a frame carrying data read heads which is arranged to verify the integrity of data on a body.  In this particular
example, data on a web of sheet material comprises a
plurality of cheques printed thereon in two rows
which are subseqently severed from the web and
assembled into a conventional cheque book.  The frame
is typically mounted over the web as the web is being
transported between production stations, which do not
form part of the present invention.

Cheques to be personalised in a continuous web of
paper usually have a unique numeric reference control
printed by a code line printer with a magnetic ink
character recognition technique.  This may  be an
8 digit account number unique to a particular book,
or even a more simple numeric reference number usually
in sequence per account.  This information is incorporated
in the code line 9.  The name of the account holder
associated with that number is printed at a second
position 10 in a separate printing process.

The personalisation stations are computer controlled
and the code line printer (not shown) knows the account
number and is required to print it.  An alpha personalisation printer for printing the other data can also
"know" the account number although it is required to
print out only the name in the position 10.  Both
production stations then have access to a common number
of several digits.

Because a large number of cheques are required, it is inevitable that the printing process must be carried out at high speed and therefore the web of paper on which the cheques are printed must pass through the printing prcesses at this speed. As shown, the web of paper has location holes 11 on each lateral edge for tractor feed through the printing presses but this, in itself, is not sufficient to prevent a mis-match between two printing stations.

Since the properties of the colour black are such that black absorbs to a high degree all electromagnetic emission frequencies within and near the visible light range of the electromagnetic spectrum, it follows that the absorption of infra-red light by paper will be much greater when the paper is black (by means of printing) when compared with white or light coloured paper. The present invention makes use of this principle by virtue of the fact that a variation is reflected light will cause a variation in phototransistor current at a sensor; this in turn will activate a discriminator which can be made to determine finely between print (black) and no print (white). The discrimination then issues binary signals intelligible to a computer system corresponding to the two perceived states.

In one printing station the web of material is printed with the basic data for each cheque by the alpha printer using a laser printing technique.

This basic information includes the bank and branch, the name of the account holder in the position 10, an indicator in the form of a strobe mark 12 adjacent the left hand side of the web as used in Figure 1 and a series marks 13 at a predetermined location relative to the strobe mark 12 adjacent the right hand side of each cheque and extending longitudinally to form a binary code data sub-set. Alternatively a bar code type of data could be provided.

At a second printing station the code line 9 is printed and, in this example, part of the information in the code line is aligned with the longitudinal axis of the binary code 13 which forms part of the sub-set of data.

As can be seen from Figure 1, the frame work carries a plurality of reading heads 14a and 14b to 14d each of which is mounted on a pair of parallel rods 15 so as to be fully adjustable in two direction. The left read head 14a comprises an independent read head observing the pre-printed strobe mark 12. For each application, the position of the single read head 14a is adjusted so that it is correctly aligned with the strobe marks as they pass the frame in the direction of the arrow A. The remaining read heads comprise a set, two of which 14b and 14c are positioned to read the presence or absence of two binary digits in the binary code section 13 whilst the other two read heads form a pair 14d which are positioned together so as to read the parts of the code line 9 aligned with the binary code station, this part of the code line comprising the second set of data. The relative position of all the read heads 14b to 14d relative to the single strobe head 14a are such that when the strobe head emits a signal indicative of the presence of the strobe mark 12 all the other read heads 14b - 14d are open for a "read" step for the duration of the strobe signal. T e linear dimension of the strobe mark 12 is such that it will also verify that the code line is being printed in the correct position within normal production tolerances.

The read heads 14a to 14d are each an optically linked infra-red source/sensor pair. The source is an infra-red light emitting diode, which is housed in the same body as an infra-red light-sensing transistor. The paths of the light from the source and to the sensor is such that, being non-parallel, the axes of these meet at a crosspoint; it is at the crosspoint that the paper to be examined is placed. For the devices currently employed, the optimal crosspoint is 4-6 millimetres from the end of the infra-red source/sensor pair

The output signals of the two sets of data determined by the read-heads 14a and 14b to 14d are fed to computer system which includes a comparator for comparing the two sets of signals representative of the two sets of data. These two signals corresponding to a first binary code derived from the printing carried out by the laser printing in the first printing stage and a second signal derived from the code line 9. These two signals are compared and if in agreement the web of material will be allowed to proceed for the next scanning sequence initiated by the next strobe mark 12 on the web of material. A difference between the two signals as determined in the comparator will result in an output signal which may comprise an audible signal or an error message on a VDU. The output signal may also be used to stop the movement of the web.

By the use of appropriate binary codes it is possible for the apparatus by appropriate comparison of specific data and sequences in the comparator to verify the start and end of each cheque book which consists of, for example, 32 cheques and the same process may be used to ensure correct collation of the individual cheques into a cheque book after they have been severed from the web.

Although the above described embodiment relates to the integrity checking of cheques it will be appreciated that the invention is readily applicable to many other types of integrity checking. For example, in the manufacture of tinned products, the present method may be used to ensure that the correct label is put on the correct tin. Thus, the tin would be marked at a filling station with a first set of data indicative of the contents of the tin and the second set of data will be contained on the label and would be indicative of the name of contents on the label. Integrity checking of the two sets of data would ensure that the label matched the contents of the tin. A mis-match occurring would cause an error signal to be generated.

Figure 3 shows an alternative embodiment in the form of a schematic plan view of the invention which agains includes a signal strobe 21 but which is used in conjunction with 10 linearly aligned data read heads 22. As in the previous embodiment, the precise position of the laser read heads are adjusted from the frame work. The read heads 22 are adapted to read data contained as black markers 24 on a web of material 23 fed past the read heads, in the direction indicated by arrow B. The web of material includes a strobe indicator or marker aligned with the strobe head 21 so that when the strobe head emits an output signal indicative of the presence or the strobe marker 25 the ten data read heads 22 read the presence or absence of marks 24 aligned therewith, the presence of a mark indicating, for example, in the binary code a '1' and the absence of a mark (which generates no signal in the respective read head), indicating a binary '0'. The information contained in each scan can be derived from two sources to enable the comparison to be made in a single scan but alternatively, successive scans initiated by the successive strobe marks, can be derived from separate sources so that the comparison takes place in successive scans.

Although the described embodiments utilise a source of infra-red radiation to read the data it will be understood that any type of perceivable source of radiation may be used. For example, beta charged particles may be used with a suitable web, the particles normally passing through the web, but being reflected by appropriate markers, or vice-versa.

Furthermore, the apparatus may incorporate a further strobe read head for use in normal checking. Thus, when visually checking for printing errors if a section of web were deemed to be unsuitable, the operator would manually add marks at each end of the section in a column aligned with the further strobe head. The strobe head would read the marks to generate a signal used to automatically discard the unsuitable section.

Although the system is described as being used with a moving web, it could of course, be used with a stationary web. The system and its associated software is very flexible and a wide variety of checking sequences may be utilised to provide the security and verification required for the particular application.

0146403

- 13 -

CLAIMS:

1.  Apparatus for checking the integrity between two sets of data, the sets being applied to a body in two or more separate processes, or being separately applied to individual elements which are combined to form said body, the apparatus including:-

detecting means responsive to an indicator forming at least part of said first set of data on the body or an element to initiate a reading by sensor means of data positioned on said body or element at a predetermined positional relationship to said indicator, means to generate a first code representative of said data, read by the sensor means,

comparator means to compare said first code with a code representative of at least a part of said second set of data,

and means to provide a signal indicative of a mis-match between said two sets of data if a predetermined relationship between the codes is not established by said comparator means.

2.  Apparatus according to claim 1 wherein the detecting means comprises means for generating a radiated signal, and means to receive the radiated signal, when said indicator is in a predetermined position relative to the detecting means.

3. Apparatus according to claim 1 or 2 wherein at least one of said sets of data comprises a binary code representative of at least part of the second set of data.

4. Apparatus according to any one of claims 1 to 3 wherein said sensor means comprises a sensor having means for generating a radiated signal and means to receive the radiated signal when said detecting means initiates said reading and when a marker is aligned with said sensor means, the presence or absence of a marker generating an appropriate binary code digit.

5. Apparatus according to claim 4 wherein the sensor means comprises a plurality of said sensors, the sensors, when a reading is initiated, generating a plurality of binary code digits.

6. Apparatus according to any one of claims 1 to 5 wherein the detecting means and the sensor means comprises reflective optical sensor switches responsive to differing characteristics on said body or element.

7. Apparatus according to any one of the preceding claims wherein said body or at least one of said individual elements comprises sheet material adapted to be moved relative to said apparatus and of a relative light colour, said indicator and marker or markers comprising an area of relatively dark colour on said sheet.

8. Apparatus according to any one of claims 1 to 7 including a frame, detector means comprising an optical sensor switch adjustably mounted on said frame, a plurality of sensor means comprising a plurality of optical sensor switches adjustably mounted on said frame, means to feed a sheet material relative to said frame, the positions of the sensor means being adjustable to be aligned with indicators and markers on said sheet material, means to receive signals from the detector means and sensor means, and comparator means to compare the received signals and to provide an output signal if a predetermined relationship between said received signals is not indicated.

9. A method of checking the integrity between two sets of data applied to a body in two separate processes, comprising, the steps of providing as part of the first set of data, an indicator, detecting the presence of the indicator, and when an indicator is present initiating readings of further data comprising a first code representative of at least part of said first set of data and a second code representative of the second set of data, comparing the two codes and generating an output signal if a predetermined relationship between the two codes is not established.

FIG.1

FIG.2

FIG.3